# EUROPÄISCHE PATENTSCHRIFT

(11) **EP 0 973 083 B1**
(45) Veröffentlichungstag und Bekanntmachung des Hinweises auf die Patenterteilung: **28.04.2004**
(21) Anmeldenummer: 99112687.1
(22) Anmeldetag: 02.07.1999
(51) Int. Cl.: G05D 23/13, E03C 1/04, E03C 1/044

(54) **Mischventil**
Sanitary mixing valve
Robinet mitigeur

(30) Priorität: 13.07.1998 DE 19831272
(43) Veröffentlichungstag der Anmeldung: 19.01.2000
(73) Patentinhaber: Grohe Water Technology AG & Co. KG, 58675 Hemer (DE)
(72) Erfinder: Humpert, Jürgen, 58675 Hemer (DE); Gransow, Eckhard, 58730 Fröndenberg (DE); Dickel, Harald, 58644 Iserlohn (DE)

(56) Entgegenhaltungen:
- DE-A- 2 945 879
- GB-A- 1 591 661
- US-A- 2 657 859
- US-A- 4 760 953
- US-A- 5 205 483
- US-A- 5 341 987

## Beschreibung

Die Erfindung betrifft ein Mischventil mit einem in einem Gehäuse angeordneten Ventilkörper, der den Öffnungsgrad einer Einlaßöffnung für Kaltwasser und einer Einlaßöffnung für Heißwasser gegenläufig steuert, wobei der Ventilkörper mit einem Thermostaten verbunden ist, der mit einem Fühler im Bereich einer Mischwasserauslaßöffnung die Mischwassertemperatur erfaßt, derart, daß bei einer Temperaturänderung des Mischwassers vom Thermostaten der Ventilkörper zur Aufrechterhaltung einer vorbestimmten Mischwassertemperatur entsprechend in seiner Position zu den Einlaßöffnungen verändert wird.

Ein derartiges Mischventil ist aus der europäischen Patentschrift 0 242 680 B1 bekannt. Diese bekannte Mischeinrichtung ist zum Bereiten von temperiertem Warmwasser vorgesehen, wobei vom Benutzer mit einer Temperaturvorwähleinrichtung die Temperatur des Zapfwassers voreingestellt werden kann. Damit ein unbeabsichtigtes Einstellen von Heißwasser und damit die Gefahr einer Verbrühung des Benutzers ausgeschlossen wird, ist der Drehgriff der Temperaturvorwähleinrichtung mit einer Anschlagausbildung versehen, die nur eine Temperatureinstellung unterhalb einer Verbrühungstemperatur erlaubt. Erst nachdem vom Benutzer die Anschlagausbildung gelöst wird, kann die Temperaturvorwähleinrichtung auch in einen Temperaturbereich des Heißwassers gestellt werden.
Außerdem werden aber vielfach einfachere Wasserzapfarmaturen, insbesondere an Spül- und/oder Waschbecken, vorgesehen, bei denen entweder mit einem Einstellgriff, mit dem in einem ersten Freiheitsgrad das Mischungsverhältnis durch eine gegenläufige Änderung der Einlaßquerschnitte des zufließenden Kalt- und Warmwassers und in einem zweiten Freiheitsgrad die Wasserzapfmenge durch eine gleichsinnige Änderung der Einlaßquerschnitte eingestellt werden kann, oder mit zwei Einstellgriffen, bei denen mit einem ersten Drehgriff ein Heißwasserzapfventil und mit einem zweiten Drehgriff ein Kaltwasserzapfventil betätigbar ist. Bei diesen Wasserzapfeinrichtungen kann es relativ leicht bei einem Benutzer durch Fehlbedienung oder durch einen Druckabfall im Kaltwasserversorgungsleitungsnetz zu Verbrühungen kommen.

In der in der deutschen Offenlegungsschrift DE 29 45 879 A1 beschriebenen Einrichtung für eine Mischbatterie in Verbindung mit einem drucklosen Heißwasserbereiter wird zur Verhinderung des Austritts von Heißwasser ein Thermostatventil vorgesehen. Mit dem Thermostatventil wird lediglich der Zufluss von Kaltwasser gesteuert. Die zuströmende Heißwassermenge wird dabei vom Thermostatventil nicht beeinflusst.

Außerdem wurde in der US-A-5 341 987 bereits eine Ventileinrichtung vorgeschlagen, mit der die Temperatur des abgegebenen Wassers unterhalb einer gegebenen Maximaltemperatur gehalten werden soll. Diese Ventileinrichtung beinhaltet eine Druckausgleichs- und eine thermostatische Ventilvorrichtung. Sie besteht aus vielen Einzelteilen und benötigte einen erheblichen Platz.

Der Erfindung liegt die Aufgabe zugrunde, ein eine Verbrühungsgefahr weitgehend ausschließendes verbessertes Mischventil zur Verbindung mit einer ungesicherten Wasserzapfarmatur vorzuschlagen, das insbesondere kompakt ausgebildet und kostengünstig herstellbar ist.

Diese Aufgabe wird erfindungsgemäß durch ein Mischventil mit den im Anspruch 1 angegebenen Merkmalen gelöst.

Weitere Ausgestaltungen der Erfindung sind in den Ansprüchen 2 bis 9 angegeben.

Mit den erfindungsgemäßen Maßnahmen wird ein kompaktes Mischventil mit einer Mischwassertemperatureinstellvorrichtung geschaffen, an dem vom Fachmann die maximale Temperatur des Mischwassers eingestellt werden kann. Hierdurch kann beispielsweise auch von Zeit zu Zeit vom Fachmann eine thermische Desinfektion der Wasserzapfarmatur vorgenommen werden.
Zweckmäßig kann die erfindungsgemäße Mischwassertemperatureinstellvorrichtung mit einer Kappe geschützt werden, so daß Veränderungen an der Temperatureinstellung nur vom Fachmann vorgenommen werden können und die Einstelleinrichtung gegen Vandalismus gesichert ist.

In weiterer Ausgestaltung der Erfindung kann vorteilhaft das Mischventil in einem gesonderten Gehäuse angeordnet werden, welches zweckmäßig an einem an einer Gebäudewand angeordneten Eckventil des Heißwasserversorgungsleitungsnetzes befestigt wird, so daß das in der Temperatur geminderte Mischwasser über den Heißwasseranschluß der wasserzapfarmatur dieser einfach zugeleitet werden kann. Mit einer derartigen Mischventilausbildung kann auch eine bereits installierte Wasserzapfarmatur später nachgerüstet werden.

Ausführungsbeispiele der Erfindung sind in der Zeichnung dargestellt und werden im folgenden näher beschrieben. Es zeigt
- Fig. 1: einen Mischventileinsatz als Baueinheit in vergrößerter Darstellung im Längsschnitt;
- Fig. 2: den in Fig. 1 gezeigten Mischventileinsatz in Draufsicht;
- Fig. 3: eine Untertischanordnung des Mischventils mit dem in Fig. 1 gezeigten Mischventileinsatz im Längsschnitt;
- Fig. 4: eine Wasserzapfarmatur mit dem in Fig. 1 gezeigten Mischventileinsatz in der Schnittebene IV der Fig. 5;
- Fig. 5: die in Fig. 4 gezeigte Wasserzapfarmatur um 90° gedreht in der Schnittebene V.

Der Einfachheit halber sind bei den Ausführungsbeispielen in der Zeichnung gleiche oder entsprechende Elemente mit jeweils gleichen Bezugszeichen versehen.
Bei den in der Zeichnung dargestellten Ausführungsbeispielen ist jeweils ein Mischventileinsatz 1 als Baueinheit ausgebildet, die in eine Aufnahmebohrung 7 eines Gehäuses einsetzbar ist. Der Mischventileinsatz besteht im wesentlichen aus einem als Dehnstoffelement ausgebildeten Thermostaten 10, einem etwa rohrförmigen Ventilkörper 11, einem Kopfstück 12 und einer Temperatureinstellschraube 13 mit einem Ring 8, auf dem eine Temperaturskala 80 angeordnet ist.
Der Thermostat 10 ist an einem Teilbereich zur Erfassung der Umgebungstemperatur als Fühler 100 ausgebildet und weist an der dem Fühler 100 gegenüberliegenden Stirnseite einen Rohransatz 102 auf, in dessen Bereich der Ventilkörper 11 mittels Gewinde befestigt ist. In dem Rohransatz 102 ist ein Stößel 101 gelagert, der in Abhängigkeit von der vom Fühler 100 erfaßten Umgebungstemperatur eine entsprechende axiale Auslenkung erfährt.
Der Thermostat 10 ist mit einem axial vorstehenden Bereich des Rohransatzes 102 durch eine Axialbohrung 121 des Kopfstückes 12 gedichtet hindurchgeführt und trägt koaxial in einem rohrförmigen Ansatz 120 des Kopfstükkes 12 eine Gewindemutter 1021, an der sich an einer Stirnseite eine vom Grund des Kopfstückes 12 aufgenommene Rückstellfeder 103 abstützt. In dem Ansatz 120 ist ein Innengewinde 1201 ausgebildet, in das eine topfartige Temperatureinstellschraube 13 eindrehbar ist. Von der topfartigen Ausbildung der Temperatureinstellschraube 13 wird die Gewindemutter 1021 von einer zylindrischen Innenwandung 131 aufgenommen und axial beweglich geführt. Im Grund der topfartigen Ausbildung ist eine Anschlagfläche 130 ausgebildet, an der der Stößel 101 des Thermostaten 10 zur Anlage gelangt. Wird von dem Fühler 100 des Thermostaten 10 ein Temperaturanstieg festgestellt, so wird entsprechend der Stößel 101 aus dem Rohransatz 102 ausgetrieben, so daß der Thermostat 10 zusammen mit dem Ventilkörper 11 entgegen der Kraft der Rückstellfeder 103 von dem Kopfstück 12 wegbewegt wird. Bei einer Temperaturverringerung folgt eine umgekehrte Bewegung, bis der Ventilkörper 11 mit seiner Stirnseite an dem Kopfstück 12 zur Anlage gelangt. Mit einer Änderung der Axialposition der Temperatureinstellschraube 13 kann somit die Mischwassertemperatur voreingestellt werden. Zu diesem Zweck ist an der äußeren Stirnseite der Temperatureinstellschraube 13 in einer Sackbohrung ein Innensechskant 132 ausgebildet, in den ein entsprechender Schlüssel zur Einstellung des Mischventils einsteckbar ist. Die Temperatureinstellschraube 13 weist hierbei eine bestimmte Schwergängigkeit auf, so daß eine unbeabsichtigte Verstellung vermieden wird.

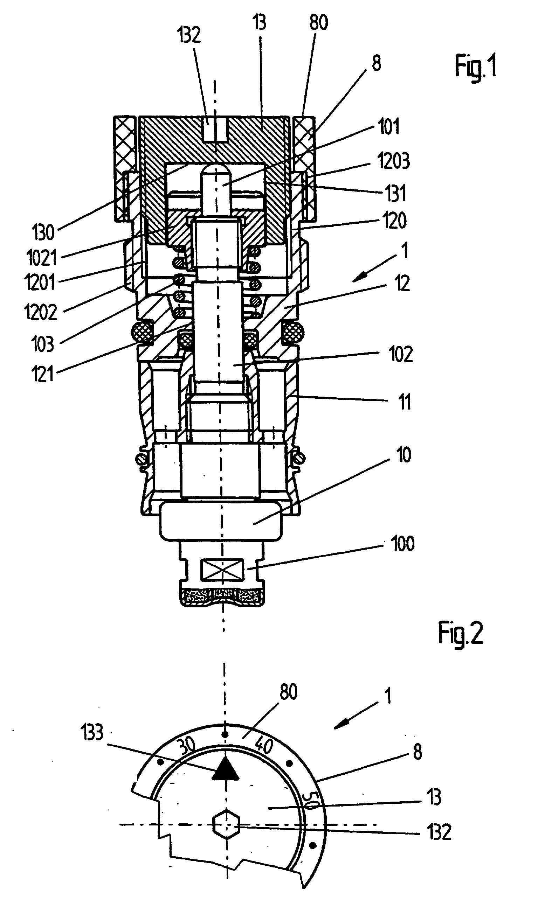

Am Außenmantel des Ansatzes 120 ist außerdem ein Gewinde 1202 ausgebildet, mit dem der Mischventileinsatz 1 in der Aufnahmebohrung 7 eines Gehäuses fixierbar ist. Am äußeren Endbereich des rohrförmigen Ansatzes 120 ist eine Riefenverzahnung 1203 ausgebildet, an der ein Drehwerkzeug zum Einschrauben des Mischventileinsatzes 1 in die Aufnahmebohrung 7 ansetzbar ist. Gleichzeitig dient die Riefenverzahnung 1203 einer drehfesten Halterung des Rings 8, auf dem an der vorstehenden Stirnseite die Temperaturskala 80 ausgebildet ist. Alternativ ist es denkbar, daß anstatt der Riefenverzahnung eine Sechskant-Schlüsselfläche an einem Ansatz 120 ausgebildet ist. Zusätzlich wird dann ein Teil mit einer äußeren Riefenverzahnung auf den Sechskant aufgesteckt. Wie es insbesondere aus Fig. 2 zu entnehmen ist, steht die Skala 80 mit einer auf der äußeren Stirnseite der Temperatureinstellschraube 13 ausgebildeten Marke 133 in Verbindung.

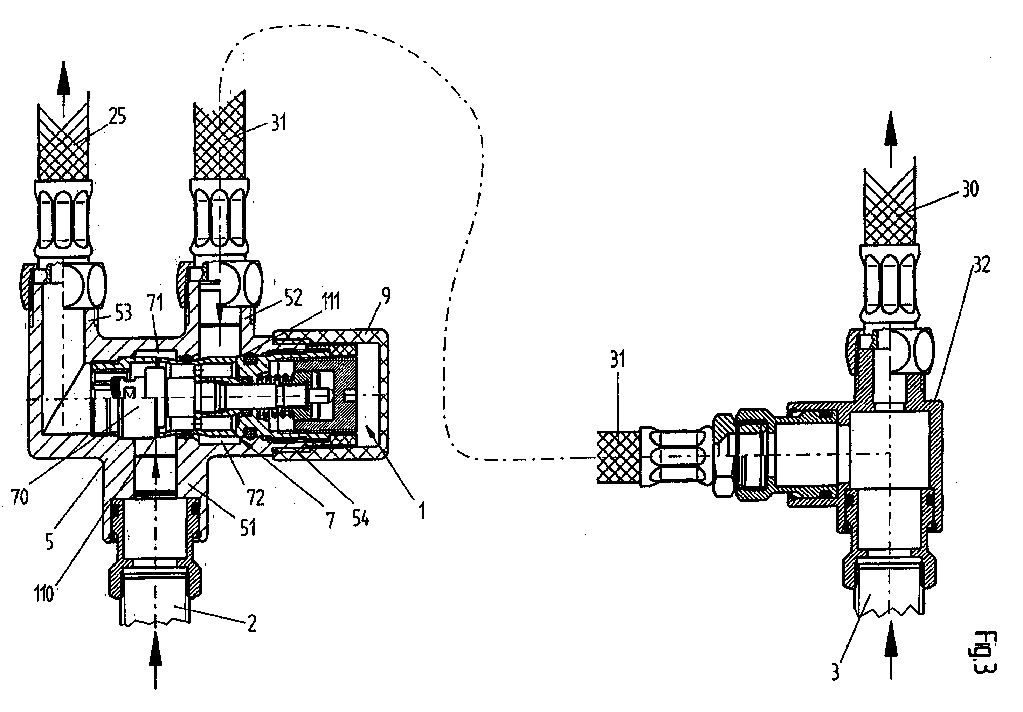

Der vorstehend beschriebene Mischventileinsatz 1 kann, wie es insbesondere aus Fig. 3 zu entnehmen ist, in einem separaten Gehäuse 5 in eine Aufnahmebohrung 7 eingesetzt werden. Das Gehäuse 5 weist hierbei einen Anschluß 51 für eine Heißwasserzuflußleitung 2 auf, wobei die Heißwasserzuflußleitung 2 Teil eines nicht dargestellten Eckventils bildet. Parallel zu der Heißwasserzuflußleitung 2 ist eine Kaltwasserzuflußleitung 3 vorgesehen, wobei die Kaltwasserzuflußleitung 3 Teil eines nicht dargestellten Eckventils ist. An der Kaltwasserzuflußleitung 3 ist ein T-Stück 32 angeschlossen, von dem eine Kaltwasserleitung 31 zum Gehäuse 5 an einen Anschluß 52 abzweigt. Die Kaltwasserleitung 30 führt vom T-Stück 32 direkt zu einer in der Zeichnung nicht dargestellten Wasserzapfarmatur.
An einem weiteren Anschluß 53 am Gehäuse 5 ist eine Mischwasserauslaßleitung 25 angeschlossen, die andererseits - in der Zeichnung nicht dargestellt - mit dem Heißwasseranschluß der Wasserzapfarmatur verbunden wird.
Zur Sicherung des Mischventileinsatzes mit der Temperatureinstellschraube 13 ist außerdem eine Kappe 9 vorgesehen, die auf ein Gewinde 54 des Gehäuses 5 aufschraubbar ist.

Die vorstehend beschriebene Einrichtung hat folgende Funktionsweise:
Das vom Versorgungsleitungsnetz zuströmende Heißwasser tritt in den Anschluß 51 in das Gehäuse 5 ein, während das Kaltwasser vom Kaltwasserversorgungsleitungsnetz in das T-Stück 32 eintritt und von hier über die Kaltwasserleitung 31 und dem Anschluß 52 dem Gehäuse 5 zugeführt wird. Im Grund der Aufnahmebohrung 7 ist ein rohrförmiger Ventilsitz 70 für den Heißwassereinlaß angeordnet. Zwischen einer vorstehenden Stirnseite des Ventilsitzes 70 und einer Stirnseite des Kopfstücks 12 ist der Ventilkörper 11 axial mit Spiel plaziert. Das zufließende Heißwasser wird hierbei in einen äußeren Heißwasserringraum 71 und das zufließende Kaltwasser in einen äußeren Kaltwasserringraum 72 eingespeist, wobei die beiden Zuflüsse durch den rohrförmigen Ventilkörper 11 voneinander getrennt werden. Das Heißwasser kann hierbei allein über einen Ringspalt 110 und das Kaltwasser über einen Ringspalt 111 in den Bereich des Thermostaten 10 eintreten und sich hier zu temperiertem Wasser mischen, wobei stromabwärts vom Fühler 100 die Temperatur des Mischwassers erfühlt wird. Wird eine zu hohe Mischwassertemperatur oder eine Temperaturerhöhung erfühlt, so erfährt der Stößel 101 eine Auslenkung und bewegt den Thermostaten 10 zusammen mit dem Ventilkörper 11 in Richtung auf den Ventilsitz 70 für Heißwasser, so daß der Heißwassereintritt gedrosselt und andererseits der Kaltwassereinlaß um den gleichen Betrag erhöht wird, bis die Sollwerttemperatur wieder erreicht ist. Bei einer Temperaturabsenkung des Mischwassers erfolgt die Bewegung in umgekehrter Richtung. Das in den Anschluß 53 abgegebene Mischwasser überschreitet somit die an der Temperatureinstellschraube 13 vorgewählte Temperatur nicht, so daß der Wasserzapfarmatur nur Mischwasser unterhalb der eingestellten Maximaltemperatur über die Mischwasserleitung 25 dem Heißwasseranschluß der Wasserzapfarmatur zugeführt wird.
Zur Justierung der Temperaturskala 80 wird zunächst die Temperatureinstellschraube 13 solange bewegt, bis eine Mischwasserausgangstemperatur von beispielsweise 40°C mit einem Thermometer gemessen wird. In dieser Position kann dann der Ring 8 in der entsprechenden Drehstellung, was durch eine entsprechend feine Riefenverzahnung ermöglicht wird, auf die Riefenverzahnung 1203 des Kopfstücks 12 aufgesteckt werden. Danach kann die Kappe 9 auf das Gewinde 54 aüfgeschraubt werden und das Mischventil ist betriebsbereit. Soll hiernach, z. B. zu einem späteren Zeitpunkt, eine thermische Desinfektion der Wasserzapfarmatur erfolgen, so kann durch Abnahme der Kappe 9 die Temperatureinstellschraube 13 in einen entsprechenden Temperaturbereich, z. B. 60°C oder 70°C, gedreht werden, so daß während der Aufsicht des Fachmanns die Wasserzapfarmaturenreinigung vorgenommen werden kann. Danach wäre dann die Temperatureinstellschraube 13 wieder auf die Sicherheitstemperatur, z. B. 40°C, zurückzustellen.
In dem Ausführungsbeispiel ist die Mischwasserauslaßleitung 25, die Kaltwasserleitung 30 und die Kaltwasserleitung 31 jeweils als flexible Schlauchleitung ausgebildet. Selbstverständlich können aber auch Metallrohrleitungen, z. B. aus Kupfer, eingesetzt werden.

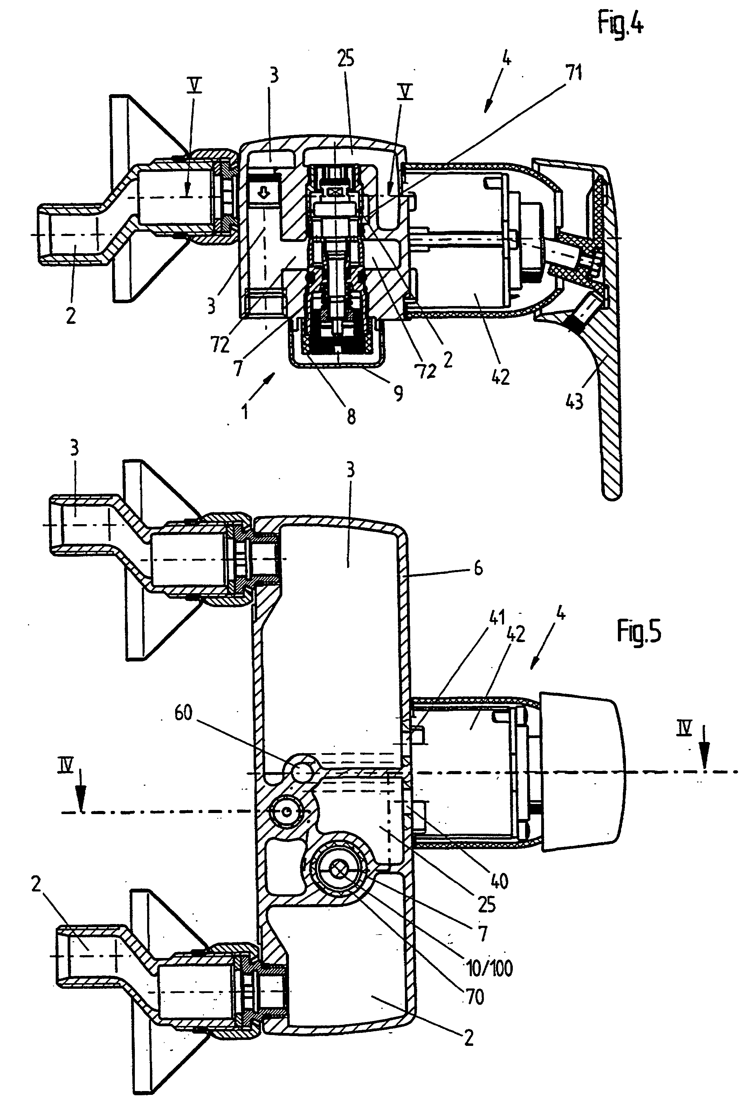

Bei dem in Fig. 4 und 5 gezeigten Ausführungsbeispiel ist der in Fig. 1 und 2 dargestellte Mischventileinsatz 1 unmittelbar in einem Armaturenkörper 6 einer Wasserzapfarmatur 4 angeordnet. Die Aufnahmebohrung 7 ist von der Unterseite des Armaturenkörpers 6 aus zugänglich für die Aufnahme des Mischventileinsatzes 1. Die Wasserzapfarmatur 4 ist als bekanntes Eingriffmischventil ausgebildet, wobei die Mischventilelemente in einer Ventilkartusche 42 angeordnet sind, auf der ein Handgriff 43 angeordnet ist. Mit dem Handgriff 43 kann in einem ersten Freiheitsgrad das Mischungsverhältnis des zufließenden Kalt- und Warmwassers sowie in einem zweiten Freiheitsgrad die Ausflußmenge pro Zeiteinheit eingestellt werden. Wie es insbesondere aus Fig. 5 zu entnehmen ist, ist hierbei die Heißwasserleitung 2 durch ein S-Anschlußstück und einen Heißwasserkanal im Armaturenkörper 6 ausgebildet und mündet im Bereich der Bohrung 7 in einen Heißwasserringraum 71. Die Kaltwasserleitung 3 ist als gegenüberliegendes S-Anschlußstück ausgebildet und wird über einen Kaltwasserkanal einem Kaltwasserringraum 72 im Bereich der Aufnahmebohrung 7 zugeführt. Das in dem Mischventileinsatz 1 erzeugte Mischwasser wird über die als Mischwasserkanal ausgebildete Mischwasserauslaßleitung 25 einem Heißwasseranschluß 40 der Ventilkartusche 42 zugeführt, während das Kaltwasser aus der Kaltwasserzuflußleitung 3 abgezweigt einem Kaltwasseranschluß 41 der Ventilkartusche 42 zugeführt wird, wie es insbesondere aus Fig. 5 zu entnehmen ist. Das in der Ventilkartusche 42 erzeugte Zapfwasser wird dann einem Auslaß 60 im Armaturenkörper zugeführt und kann von hier aus an einen Verbraucher, z. B. eine Brause, abgegeben werden.
Die Einstellung der maximalen Mischwassertemperatur sowie die Justierung der Temperaturskala 80 erfolgt in gleicher Weise wie bei dem Ausführungsbeispiel nach Fig. 3.

## Patentansprüche

1. Mischventil mit einem in einem Gehäuse angeordneten Ventilkörper, der den Öffnungsgrad einer Einlaßöffnung für Kaltwasser und einer Einlaßöffnung für Heißwasser gegenläufig steuert, wobei der Ventilkörper mit einem Thermostaten verbunden ist, der mit einem Fühler im Bereich einer Mischwasserauslaßöffnung die Mischwassertemperatur erfaßt, derart, daß bei einer Temperaturänderung des Mischwassers vom Thermostaten der Ventilkörper zur Aufrechterhaltung einer vorbestimmten Mischwassertemperatur entsprechend in seiner Position zu den Einlaßöffnungen verändert wird, wobei
- das Mischventil in der Heißwasserzuflußleitung (2) einer Wasserzapfarmatur (4) angeordnet und die Mischwasserauslaßleitung (25) mit dem Heißwasseranschluß (40) der Wasserzapfarmatur (4) verbunden ist,
- das der Wasserzapfarmatur (4) zugeführte Mischwasser so temperiert ist, daß eine Verbrühungsgefahr eines Benutzers ausgeschlossen ist,
- der Ventilkörper (11) mit dem Thermostaten (10) an einem Kopfstück (12) zu einer Baueinheit angeordnet ist,
- an der zum Ventilkörper (11) abgekehrten Stirnseite des Kopfstücks (12) ein rohrförmiger Ansatz (120) ausgebildet ist, in dem ein Innengewinde (1201) zur Aufnahme einer Temperatureinstellschraube (13) vorgesehen ist.

2. Mischventil nach Anspruch 1, **dadurch gekennzeichnet, daß** das Mischventil in einem separaten Gehäuse (5) vorgesehen ist, welches an einer Heißwasserzuflußleitung (2), vorzugsweise Eckventil, befestigbar ist, wobei Anschlüsse (51,52,53) für eine Kaltwasserleitung (31) eine Heißwasserleitung (2) und eine Mischwasserauslaßleitung (25) vorgesehen sind.

3. Mischventil nach Anspruch 1, **dadurch gekennzeichnet, daß** das Mischventil in einem Armaturenkörper (6) der Wasserzapfarmatur (4) vorgesehen ist, in dem die Heißwasserleitung (2) als ein Heißwasserkanal, die Kaltwasserleitung (3) als ein Kaltwasserkanal und die Mischwasseranschlußleitung (25) als Mischwasserkanal ausgebildet ist, wobei die Mischwasserauslaßleitung (25) in den Heißwasseranschluß (40) der Zapfarmatur (4) mündet.

4. Mischventil nach wenigstens einem der vorhergehenden Ansprüche, **dadurch gekennzeichnet, daß** die Temperatureinstellschraube (13) topfförmig ausgebildet ist, und eine innere Anschlagfläche (130) für die Anlage und Abstützung eines in Abhängigkeit von der im Bereich eines Fühlers (100) herrschenden Temperatur axial ausgelenkten Stößels (101) des Thermostaten (10) hat, wobei eine zylindrische Innenwandung (131) der Temperatureinstellschraube (13) als Axialführung für einen Endbereich des Thermostaten (10) dient, während an der äußeren Stirnseite der Temperatureinstellschraube (13) ein Polygon für den Angriff eines Drehwerkzeugs ausgebildet ist.

5. Mischventil nach Anspruch 4, **dadurch gekennzeichnet, daß** als Polygon ein Innensechskant (132) in einer Sackbohrung vorgesehen ist.

6. Mischventil nach wenigstens einem der vorhergehenden Ansprüche, **dadurch gekennzeichnet, daß** am Außenmantel des Ansatzes (120) ein Gewinde (1202) zur Halterung des Kopfstücks (12) in einer Aufnahmebohrung (7) eines Gehäuses (5) oder eines Armaturenkörpers (6) ausgebildet ist, während am äußeren Endbereich des Außenmantels eine Riefenverzahnung (1203) angeformt ist, die für den Angriff eines Drehwerkzeugs verwendbar ist.

7. Mischventil nach Anspruch 6, **dadurch gekennzeichnet, daß** auf der Riefenverzahnung (1203) ein Ring (8) mit einer Temperaturskala (80) aufsteckbar ist, wobei die Riefenverzahnung (1203) so dimensioniert ist, daß eine fein gestufte Justierung zu einer auf der äußeren Stirnseite der Temperatureinstellschraube (13) angeordneten Marke (133) ermöglicht ist.

8. Mischventil nach wenigstens einem der vorhergehenden Ansprüche, **dadurch gekennzeichnet, daß** wenigstens die Temperatureinstellschraube (13) mit einer Kappe (9) abdeckbar ist.

9. Mischventil nach Anspruch 8, **dadurch gekennzeichnet, daß** die Kappe (9) auf einem Gewinde (54) am Gehäuse (5) aufschraubbar oder am Armaturenkörper (6) befestigbar ist.

## Claims

1. Mixing valve having a valve body arranged in a housing, which valve body controls the degree of opening of an inlet opening for cold water and of an inlet opening for hot water in inverse relation, the valve body being connected to a thermostat which, by means of a sensor in the region of a mixed-water discharge opening, ascertains the mixed-water temperature so that, when there is a change in the temperature of the mixed water from the thermostat, the position of the valve body relative to the inlet openings is, for maintenance of a predetermined mixed-water temperature, correspondingly modified, wherein
- the mixing valve is arranged in the hot-water inflow line (2) of a water tap fitting (4) and the mixed-water discharge line (25) is connected to the hot-water connection (40) of the water tap fitting (4),
- the temperature of the mixed water supplied to the water tap fitting (4) is so controlled that there is no possible risk of a user being scalded,
- the valve body (11), together with the thermostat (10), is arranged at a head-piece (12) to form a structural unit,
- at that end face of the head-piece (12) which is remote from the valve body (11) there is formed a tubular projection (120), in which there is provided an internal thread (1201) for receiving a temperature-setting screw (13).

2. Mixing valve according to claim 1, **characterised in that** the mixing valve is provided in a separate housing (5) arranged to be fixed on a hot-water inflow line (2), preferably an angle valve, connections (51, 52, 53) being provided for a cold water line (31), a hot water line (2) and a mixed-water discharge line (25).

3. Mixing valve according to claim 1, **characterised in that** the mixing valve is provided in a fitting body (6) of the water tap fitting (4), in which fitting body (6) the hot-water line (2) is in the form of a hot-water channel, the cold-water line (3) is in the form of a cold-water channel and the mixed-water discharge line (25) is in the form of a mixed-water channel, the mixed-water discharge line (25) opening out into the hot-water connection (40) of the tap fitting (4).

4. Mixing valve according to at least one of the preceding claims, **characterised in that** the temperature-setting screw (13) is of cup-shaped construction and has an inner abutment face (130) for the abutment and support of a tappet (101) of the thermostat (10), which tappet (101) undergoes axial excursion in dependence upon the temperature prevailing in the region of a sensor (100), a cylindrical inner wall (131) of the temperature-setting screw (13) serving as an axial guideway for an end region of the thermostat (10), whilst on the outer end face of the temperature-setting screw (13) there is formed a polygon for application of a turning tool.

5. Mixing valve according to claim 4, **characterised in that**, as the polygon, there is provided an internal hexagon (132) within a blind bore.

6. Mixing valve according to at least one of the preceding claims, **characterised in that**, on the external surface of the projection (120), there is formed a thread (1202) for holding the head-piece (12) in an accommodating hole (7) in a housing (5) or in a fitting body (6), whilst at the outer end region of the external surface there is formed a corrugated toothing (1203), which can be used for the application of a turning tool.

7. Mixing valve according to claim 6, **characterised in that** a ring (8) having a temperature scale (80) is arranged to be pushed onto the corrugated toothing (1203), the corrugated toothing (1203) being so dimensioned that a finely graduated adjustment in relation to a mark (133) arranged on the outer end face of the temperature-setting screw (13) is possible.

8. Mixing valve according to at least one of the preceding claims, **characterised in that** at least the temperature-setting screw (13) is arranged to be covered by a cap (9).

9. Mixing valve according to claim 8, **characterised in that** the cap (9) is arranged to screw onto a thread (54) on the housing (5) or to be fastened to the fitting body (6).

## Revendications

1. Vanne mélangeuse avec un corps de vanne disposé dans un boîtier, qui commande en sens contraire le degré d'ouverture d'une ouverture d'admission d'eau froide et d'une ouverture d'admission d'eau chaude, le corps de vanne étant relié à un thermostat qui détecte la température de l'eau mélangée à l'aide d'un capteur dans la zone d'une ouverture d'évacuation d'eau mélangée, de telle sorte qu'en cas de modification de température de l'eau mélangée par le thermostat, le corps de vanne est modifié pour maintenir une température prédéfinie d'eau mélangée en fonction de sa position par rapport aux ouvertures d'admission d'eau, dans laquelle :
- la vanne mélangeuse est disposée dans la conduite d'arrivée d'eau chaude (2) d'une robinetterie de distribution d'eau (4) et la conduite d'évacuation d'eau mélangée (25) est raccordée à la prise d'eau chaude (40) de la robinetterie de distribution d'eau (4),
- l'eau mélangée amenée à la robinetterie de distribution d'eau (4) est tempérée de telle sorte qu'un utilisateur n'a aucun risque de s'ébouillanter,
- le corps de vanne (11) est disposé avec le thermostat (10) sur une pièce de tête (12) d'une unité modulaire,
- un épaulement (120) en forme de tube est formé sur le côté frontal de la pièce de tête (12) détourné du corps de vanne (11), épaulement dans lequel est prévu un filetage intérieur (1201) pour loger une vis de réglage de température (13).

2. Vanne mélangeuse selon la revendication 1,
**caractérisée en ce que**
la vanne mélangeuse est prévue dans un boîtier séparé (5) lequel peut être fixé à une conduite d'arrivée d'eau chaude (2), de préférence une vanne d'angle, des raccordements (51, 52, 53) étant prévus pour une conduite d'eau froide (31), une conduite d'eau chaude (2) et une conduite d'évacuation d'eau mélangée (25).

3. Vanne mélangeuse selon la revendication 1,
**caractérisée en ce que**
la vanne mélangeuse est prévue dans un corps de robinetterie (6) de la robinetterie de distribution d'eau (4), dans lequel la conduite d'eau chaude (2) est formée comme un canal d'eau chaude, la conduite d'eau froide (3) comme un canal d'eau froide et la conduite de prise d'eau mélangée (25) comme un canal d'eau mélangée, la conduite d'évacuation d'eau mélangée (25) débouchant dans la prise d'eau chaude (40) de la robinetterie de distribution (4).

4. Vanne mélangeuse selon au moins l'une des revendications précédentes,
**caractérisée en ce que**
la vis de réglage de température (13) est en forme de pot et a une surface d'arrêt intérieure (130) pour qu'un poussoir (101) du thermostat (10) dévié axialement en fonction de la température régnant dans la zone d'un capteur (100) vienne s'y poser et s'y appuyer, une paroi cylindrique intérieure (131) de la vis de réglage de température (13) servant de guidage axial pour une zone terminale du thermostat (10), alors que sur le côté frontal extérieur de la vis de réglage de température (13) est formé un polygone pour recevoir un outil de tournage.

5. Vanne mélangeuse selon la revendication 4,
**caractérisée en ce qu'**
un six pans creux (132) est prévu comme polygone dans l'alésage à trous borgnes.

6. Vanne mélangeuse selon au moins l'une quelconque des revendications précédentes,
**caractérisée en ce qu'**
un filetage (1202) pour serrer la pièce de tête (12) dans un perçage de positionnement (7) d'un boîtier (5) ou d'un corps de robinetterie (6) est formé sur l'enveloppe extérieure de l'épaulement (120), alors que sur la zone terminale extérieure de l'enveloppe extérieure est formé un engrènement à rainures (1203) pouvant être utilisé pour recevoir un outil de tournage.

7. Vanne mélangeuse selon la revendication 6,
**caractérisée en ce qu'**
un anneau (8) avec une échelle des températures (80) peut être emboîté sur l'engrenage à rainures (1203), l'engrenage à rainures (1203) étant dimensionné de telle sorte qu'il permet un réglage par petits paliers sur le repère (133) disposé sur l'un des côtés frontaux extérieurs de la vis de réglage de température (13).

8. Vanne mélangeuse selon au moins l'une quelconque des revendications précédentes,
**caractérisée en ce que**
la vis de réglage de température (13) peut être recouverte d'un cache (9).

9. Vanne mélangeuse selon la revendication 8,
**caractérisée en ce que**
le cache (9) peut être vissé sur un filetage (54) sur le boîtier (5) ou fixé sur le corps de robinetterie (6).
